# EUROPEAN PATENT APPLICATION

(11) **EP 3 709 385 A1**
(43) Date of publication of application: **16.09.2020**
(21) Application number: 18872283.9
(22) Date of filing: 17.01.2018
(51) Int. Cl.: H01M 2/10

(54) **BATTERY PACK STORAGE DEVICE**

(30) Priority: 06.11.2017 CN 201721462143 U
(71) Applicant: NIO Nextev Limited, Central, Hong Kong (HK)
(72) Inventor: ZHANG, Tiewen, Hong Kong (CN)
(74) Representative: Vossius & Partner Patentanwälte Rechtsanwälte mbB
(86) International application number: PCT/CN2018/072931
(87) International publication number: WO 2019/085274

(57) **Abstract**

Provided is a battery pack storage device, comprising: a battery storage (1) for storing a battery pack (2), and a fire-extinguishing box (3) located below the battery storage (1), wherein the fire-extinguishing box (3) has an opening at the top thereof, and the battery storage (1) has a channel adapted for the battery pack (2) to fall into the opening, the fire-extinguishing box (3) containing a fluid extinguishant in such an amount that after the battery pack (2) falls into the fire-extinguishing box (3), the battery pack (2) is submerged in the fluid extinguishant and no fluid extinguishant overflows.

## Description

### Technical Field

The utility model relates to the technical field of battery management, and particularly relates to a battery pack storage device.

### Background Art

In recent years, due to the pressures of energy shortage and environmental pollution, electric vehicles have developed rapidly. Accidents caused by the burning of lithium-ion batteries that provide power to electric vehicles are also increasingly concerned by the public.

Batteries that provide power to vehicles are encapsulated in a sturdy metal casing to form a battery pack. The problems with the batteries in an initial stage can only be known by means of monitoring by a battery management system (BMS). If the BMS has a failure in monitoring, the batteries will react and burn in the battery pack, which would not be known until the casing is burnt through. At this time, the use of a chemical inhibitor and a water gun to jet water to the batteries suffers from a low efficiency and even endanger safety officers, and the utilization rate of extinguishants is very low.

### Summary of the Utility Model

An object of one aspect of the utility model is to provide an improved battery pack storage device.

To achieve the foregoing object, one aspect of the utility model provides a battery pack storage device, wherein the battery pack storage device comprises:
a battery storage for storing a battery pack; and
a fire-extinguishing box located below the battery storage, wherein the fire-extinguishing box has an opening at the top thereof,
and the battery storage has a channel adapted for the battery pack to fall into the opening, the fire-extinguishing box containing a fluid extinguishant in such an amount that after the battery pack falls into the fire-extinguishing box, the battery pack is submerged in the fluid extinguishant and no fluid extinguishant overflows.

Optionally, in the battery pack storage device as described above, the channel is a vertical channel and is located above the opening.

Optionally, in the battery pack storage device as described above, a buffer device is arranged on the bottom inside the fire-extinguishing box.

Optionally, in the battery pack storage device as described above, the buffer device is a rubber cushion, a sponge cushion, a spring or an elastic piece.

Optionally, in the battery pack storage device as described above, a baffle capable of opening unidirectionally into the interior of the fire-extinguishing box is provided at the opening of the fire-extinguishing box, and the baffle can be automatically closed and/or a breakable disposable baffle is provided at the opening of the fire-extinguishing box.

Optionally, in the battery pack storage device as described above, an exhaust apparatus is mounted at the opening of the fire-extinguishing box.

Optionally, in the battery pack storage device as described above, the battery pack storage device has a sensor for detecting whether each battery pack stored in the battery storage is in a potential fire hazard.

Optionally, in the battery pack storage device as described above, the sensor includes a smoke detector and/or a temperature detector.

Optionally, in the battery pack storage device as described above, the battery pack storage device has a linkage mechanism, and according to a detection signal of the sensor, the linkage mechanism is adapted to move the battery pack free of a potential fire hazard and obstructing the channel away from the channel and cause the battery pack in the potential fire hazard to fall into the channel in a controlled manner.

Optionally, in the battery pack storage device as described above, the linkage mechanism comprises a partition for supporting the battery pack, and the partition is able to remove the battery pack from the battery storage and also cause the battery pack to fall into the channel.

### Brief Description of the Drawings

The disclosure of the utility model will be more apparent with reference to accompanying drawings. It should be appreciated that the accompanying drawings are merely for the purpose of illustration, and are not intended to limit the scope of protection of the utility model. In the figures:
Fig. 1 schematically shows a battery pack storage device according to an embodiment of the utility model with a battery pack in a normal storage position;
Fig. 2 schematically shows the battery pack storage device of Fig. 1 with the battery pack in a potential fire hazard being falling into a water tank on the bottom; and
Fig. 3 schematically shows the battery pack storage device of Fig. 1 with the battery pack in the potential fire hazard having fallen into the water tank on the bottom.

### Detailed Description of Embodiments

Specific embodiments of the utility model are described below in detail with reference to the accompanying drawings. In the accompanying drawings, the same reference numerals denote the same or corresponding technical features.

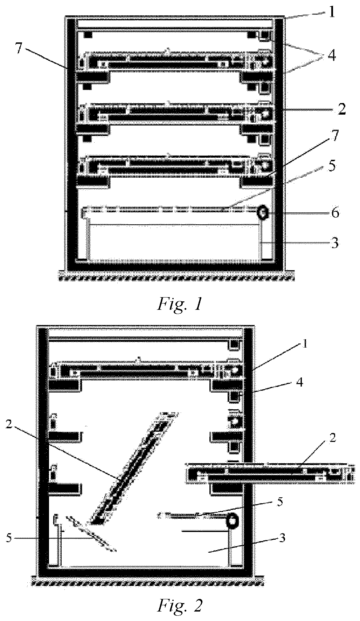

Fig. 1 schematically shows a battery pack storage device according to an embodiment of the utility model with a battery pack in a normal storage position.

As can be seen from Fig. 1, the battery pack storage device comprises a battery storage 1 for storing a battery pack and a fire-extinguishing box 3 located below the battery storage 1. In an optional embodiment, the battery storage 1 may be in the form of a frame, or in the form of a cabinet, a box, or the like. The specific form or shape of the battery storage 1 is not specifically limited here, and can be designed as required in optional embodiments.

The fire-extinguishing box 3 can be located below the battery storage 1. In particular, the fire-extinguishing box 3 may be located below the position where a battery pack 2 is stored such that when the battery pack 2 is released, the battery pack 2 can fall into the fire-extinguishing box 3 when naturally falling, with a view to achieving rapid fire extinguishing and maximizing the efficiency.

The fire-extinguishing box 3 contains a fluid extinguishant, for example but not limited to liquids such as water, or a gas that is incombustible or cannot support combustion and is heavier than air. In an optional embodiment, the amount of fluid extinguishant in the fire-extinguishing box 3 should not be too large or the fire-extinguishing box should not be too full. Space can be reserved according to the size of the battery pack 2 such that the battery pack can be completely submerged in the fluid extinguishant after falling into the fire-extinguishing box 3, and the fluid extinguishant will not overflow. It is conceivable that if the amount of the fluid extinguishant is too small, it may not be enough to submerge the battery pack to eliminate the potential fire hazard, and if the amount of the fluid extinguishant is too large, the fluid extinguishant may overflow to influence or pollute surroundings or facilities, which is not desirable.

In the illustrated embodiment, the battery storage 1 may comprise a tiered shelf to store battery packs 2, such that the battery packs 2 may be stored in the battery storage 1 in tiers, and are stored in three tiers from top to bottom as shown. It should be noted that in an optional embodiment, different numbers of tiers can be provided according to practical space conditions or other conditions. For example, the battery storage can comprise one, two or more tiers of shelves for storing one tier of battery pack, two tiers of battery packs or more tiers of battery packs, etc.

As shown, a corresponding sensor may be provided for each battery pack 2 in each tier in the battery storage 1 to sense whether a corresponding battery pack is in a potential fire hazard. The sensor may include a smoke detector and/or a temperature detector, etc.

It can be seen with reference to Figs. 1-3 that the battery storage 1 has a channel adapted for the battery pack to fall into the fire-extinguishing box from the opening of the fire-extinguishing box. If a certain battery pack 2 is detected as being in the potential fire hazard, the battery pack can be released and falls into the fire-extinguishing box 3 through the channel. Since the fire-extinguishing box 3 contains the fluid extinguishant, the battery pack 2 that has fallen therein can be submerged. In an optional embodiment, in order to prevent the adverse impact on the battery pack 2 falling into the fire-extinguishing box, the bottom of the fire-extinguishing box may be provided with a buffer item or a buffer device. For example, the buffer item or the buffer device may be such as but not limited to a rubber cushion, a sponge cushion, a spring or an elastic piece, etc.

As described above, in order to facilitate the smooth falling of the battery pack in the potential fire hazard into the fire-extinguishing box, the fire-extinguishing box has an opening at the top thereof. The foregoing channel of the battery storage may be a vertical channel and is located above the opening. It may be appreciated that, in an optional embodiment, the channel may also be provided as a slideway (such as an inclined slideway), a conveying channel, or other forms of channels, which are not exhaustive here.

It may be appreciated that, in order to facilitate the smooth falling of the battery pack from the opening of the fire-extinguishing box into the fire-extinguishing box, the opening may be appropriately larger than the dimension of the battery pack. In a specific embodiment, the dimension of the fire-extinguishing box may also be specifically designed and determined according to the size of a specific battery pack, such that the battery pack can smoothly fall into the fire-extinguishing box from a storage position in the battery storage.

In addition, in order to prevent the splash of the fluid extinguishant when the battery pack falls into the fire-extinguishing box, a baffle capable of opening unidirectionally into the interior of the fire-extinguishing box may be provided at the opening of the fire-extinguishing box, and the baffle can automatically return to a closed position. In this way, upon that the battery pack after falling into the fire-extinguishing box is submerged in the extinguishant, the baffle can automatically close to close the opening of the fire-extinguishing box, such that the splashed extinguishant will be blocked by the baffle inside the fire-extinguishing box and will not be splashed out. It may be appreciated that only one baffle may be provided, or two opposite baffles may be provided as shown in Fig 2, or other numbers and arrangements may also be used.

In an optional embodiment, a breakable disposable baffle arranged at the opening of the fire-extinguishing box may also be used. Such a disposable baffle will be broken when a battery falls into the fire-extinguishing box, and will not hinder the battery pack in the potential fire hazard from falling into the fire-extinguishing box. It may be appreciated that it is not excluded here that in some embodiments, a baffle that opens unidirectionally into the interior and a disposable baffle of this breakable material may be provided at the same time. In an optional embodiment, the baffle that opens unidirectionally and the breakable disposable baffle may also be arranged in a stacked manner at the opening of the fire-extinguishing box.

In an optional embodiment, an exhaust apparatus may be mounted at the opening of the fire-extinguishing box. For example, it may be a blower or a fan that is arranged at the opening of the fire-extinguishing box.

Fig. 2 schematically shows the battery pack storage device of Fig. 1 with the battery pack in a potential fire hazard being falling into a water tank on the bottom.

As shown in Fig. 2, in this embodiment, the battery pack located in the middle tier is detected as being in the potential fire hazard, so the battery pack is falling into the fire-extinguishing box. At this point, because the battery pack in a lower tier is in a normal state and there is no need to drop the battery pack into the fire-extinguishing box at the same time, however, the battery pack is located in the channel into which a battery is to fall, and the battery pack in the middle tier is hindered from falling, the battery pack in the lower tier may be extracted from a side of the battery storage and is returned back after the battery pack in the potential fire hazard falls into the extinguishant.

In an optional embodiment, both the release of the battery pack in the potential fire hazard and the extracting of the battery pack that hinders the aforementioned channel can be manually performed.

In another optional embodiment, in order to achieve the falling of the battery pack and/or the extracting of the battery pack from the side of the battery storage, the battery pack storage device may be provided with a linkage mechanism, and according to a detection signal of the sensor, the linkage mechanism is adapted to move the battery pack free of a potential fire hazard and obstructing the channel away from the channel and cause the battery pack in the potential fire hazard to fall into the channel in a controlled manner. For example, the linkage mechanism comprises a partition 7 for supporting the battery pack, and optionally, the partition 7 is able to remove the battery pack from the battery storage and also cause the battery pack to fall into the channel. It can be understood that the automatic operation of this linkage mechanism can save on more labor costs and has better timeliness.

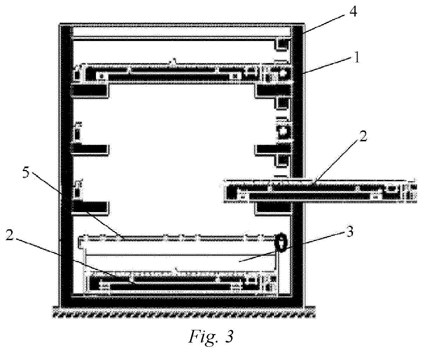

Fig. 3 schematically shows the battery pack storage device of Fig. 1 with the battery pack in the potential fire hazard having fallen into the water tank on the bottom.

Here, it should be noted that considering that a battery pack after falling into the fire-extinguishing box may lean against a side wall of the fire-extinguishing box or fall into the fire-extinguishing box in other postures, so the fire-extinguishing box needs to be designed to have an appropriate depth and not to be too shallow, in case that the battery pack cannot be completely submerged in the extinguishant.

It can be known from the above description with reference to the figures that the fire extinguishing mechanism of the battery pack storage device of the utility model is that a fire-extinguishing box is disposed at the bottom of the battery storage, which can advantageously and effectively eliminate potential fire hazards. When the batteries in the battery pack burn due to a short circuit, overcharging, over discharging, or other reasons, if the BMS fails, a sensor device such as a smoke detector and a temperature detector may monitor that the batteries burn through an upper part of the battery pack and flames and combustion products as well as some electrolyte are sprayed out, and sends a signal to a fire control host. At this point, either human intervention is introduced or the linkage device is activated by the host automatically to extract the battery pack in the lower tier (this step is eliminated if a problem occurs to the battery in the bottom tier) from the battery storage, cut off all connections between the burning battery pack and the outside and open the partition for supporting the battery pack to allow the battery pack to fall into the water tank below under the action of gravity so as to extinguish the battery pack fire by means of submersion in a large amount of water.

As can be seen from the fire extinguishing operation process, the biggest characteristics of the battery pack storage device of the utility model are: 1. quick fire extinguishing without spreading; 2. no smoke spraying due to the effect of the water tank, and no second explosion; 3. no open flame and no heat radiation; and 4. no water damage.

It may be appreciated that in a conventional fire extinguishing method, an extinguishant is used to be sprayed to objects in fires to cool or isolate the objects in fires from oxygen to achieve the effect of cooling or suffocation, or a chemical inhibition way is employed to extinguish flames. Compared with this, the utility model is a special method for a special circumstance where lithium batteries burn in a battery pack and an extinguishant is difficult to reach. When the batteries burn to a certain extent, the extinguishant (such as water) enters the battery pack, directly cools the batteries and directly dilutes reactants to quickly reduce the reaction rate, which has a high fire extinguishing efficiency, is low-cost and may be widely used in a battery swap station and a rechargeable vehicle to provide safety protection for lithium ion batteries. Especially in the case of a battery swap station, in view of limited space of the battery swap station, the utility model can be employed therein to effectively use the space at the bottom of a battery storage of the battery swap station, and has a low cost and a high efficiency.

The use of the device of the utility model solves the difficulties of untimely fire extinguishing, difficult spray positioning, and low efficiency of firefighting water, etc., and especially has no sprayed flame and dust, which not only does not cause fire spread, but also avoids a second explosion caused by the dust, resulting in a high fire extinguishing efficiency, a low cost and little influence.

The technical scope of the utility model is not limited to the above description, and a person skilled in the art may make various changes and modifications to the above embodiments without departing from the technical idea of the utility model. All of these variations and modifications should belong to the scope of the utility model.

## Claims

1. A battery pack storage device, **characterized by** comprising:
a battery storage for storing a battery pack; and
a fire-extinguishing box located below the battery storage, wherein the fire-extinguishing box has an opening at the top thereof,
and the battery storage has a channel adapted for the battery pack to fall into the opening, the fire-extinguishing box containing a fluid extinguishant in such an amount that after the battery pack falls into the fire-extinguishing box, the battery pack is submerged in the fluid extinguishant and no fluid extinguishant overflows.

2. The battery pack storage device of claim 1, **characterized in that** the channel is a vertical channel and is located above the opening.

3. The battery pack storage device of claim 1, **characterized in that** a buffer device is arranged on the bottom inside the fire-extinguishing box.

4. The battery pack storage device of claim 3, **characterized in that** the buffer device is a rubber cushion, a sponge cushion, a spring or an elastic piece.

5. The battery pack storage device of claim 1, **characterized in that** a baffle capable of opening unidirectionally into the interior of the fire-extinguishing box is provided at the opening of the fire-extinguishing box, and the baffle can be automatically closed and/or a breakable disposable baffle is provided at the opening of the fire-extinguishing box.

6. The battery pack storage device of claim 1, **characterized in that** an exhaust apparatus is mounted at the opening of the fire-extinguishing box.

7. The battery pack storage device of any one of claims 1-6, **characterized in that** the battery pack storage device has a sensor for detecting whether each battery pack stored in the battery storage is in a potential fire hazard.

8. The battery pack storage device of claim 7, **characterized in that** the sensor includes a smoke detector and/or a temperature detector.

9. The battery pack storage device of claim 7, **characterized in that** the battery pack storage device has a linkage mechanism, and according to a detection signal of the sensor, the linkage mechanism is adapted to move the battery pack free of a potential fire hazard and obstructing the channel away from the channel and cause the battery pack in the potential fire hazard to fall into the channel in a controlled manner.

10. The battery pack storage device of claim 9, **characterized in that** the linkage mechanism comprises a partition for supporting the battery pack, and the partition is able to remove the battery pack from the battery storage and also cause the battery pack to fall into the channel.
